# EUROPÄISCHE PATENTSCHRIFT

(11) **EP 1 614 335 B1**
(45) Veröffentlichungstag und Bekanntmachung des Hinweises auf die Patenterteilung: **03.10.2012**
(21) Anmeldenummer: 05013456.8
(22) Anmeldetag: 22.06.2005
(51) Int. Cl.: A01B 63/22, A01B 29/04

(54) **Fahrwerk**
Driving support
Support pour rouler

(30) Priorität: 25.06.2004 DE 102004030783
(43) Veröffentlichungstag der Anmeldung: 11.01.2006
(73) Patentinhaber: Amazonen-Werke H. Dreyer GmbH & Co. KG, 49205 Hasbergen (DE)
(72) Erfinder: Hoffmann, Karl-Peter, 27798 Hude (DE)

(56) Entgegenhaltungen:
- DE-U1- 20 313 105
- US-A- 2 270 390
- US-A- 4 339 139
- US-A- 4 519 460
- US-A- 6 000 315

## Beschreibung

Die Erfindung betrifft ein Fahrwerk gemäß des Oberbegriffes des Patentanspruches 1.

Ein derartiges Fahrwerk ist beispielsweise in der DE 203 13 105 U1 beschrieben. Bei dem Fahrwerk dieser landwirtschaftlichen Bodenbearbeitungsmaschine sind die Reifensätze, die einen Reifenpacker nach Art einer unterteilten Walze bilden, an einem Tragrahmen mittels Gelenke höhenbeweglich angeordnet. Um eine ausreichende Kippsicherheit für diese Maschine beim Transport auf Dammkronen aufweisenden Wegen zu erreichen, können die mittleren Reifensätze durch Lösen von Verriegelungsvorrichtungen, die zwischen dem Rahmen und dem mittleren Reifensätzen angeordnet sind, entriegelt werden, so dass die mittleren Reifensätze gegenüber den seitlichen Reifensätzen frei höhenbeweglich sind. Nach der Entriegelung der mittleren Reifensätze stützt sich die Maschine nur noch auf den Seitenreifensätzen ab.

Somit müssen die Seitenreifensätze das gesamte Gewicht der Maschine tragen. Die mittleren Reifensätze übernehmen nach der Entriegelung keine tragende Funktion. Die Verriegelungsvorrichtung ist relativ aufwendig. Sie muss jedes mal, wenn von Transportstellung in Arbeitsstellung und umgekehrt umgestellt wird, in Entriegelungsstellung oder Verriegelungsstellung gebracht werden. Die mittleren Reifensätze müssen über die Verriegelungseinrichtung für den Arbeitseinsatz auf dem Feld verriegelt werden. Dieses Verriegeln ist aufwendig, weil einerseits Verriegelungseinrichtungen und andererseits zusätzliche Betätigungselemente zum Betätigung der Verriegelungseinrichtung vorhanden sein müssen.

Der Erfindung liegt die Aufgabe zugrunde, das bekannte Fahrwerk in einfacher Weise ohne aufwendige Verriegelungsvorrichtungen zwecks Kippsicherheit beim Fahren auf einem eine Dammkrone aufweisenden Fahrweg weiterzubilden.

Diese Aufgabe wird erfindungsgemäß durch die kennzeichnenden Merkmale des Patentanspruches 1 gelöst. Infolge dieser Maßnahmen sind die einzelnen Reifensätze relativ zueinander beweglich, so dass sie sich der Bodenkontur anpassen können. Sämtliche Reifensätze werden ständig mit zumindest annähernd dem gleichen Gewicht beaufschlagt, da sämtliche den Reifensätzen zugeordnete Hydraulikzylinder in einem Ausgleichssystem miteinander verbunden sind. Somit können sich die Reifensätze nicht nur auf dem Acker im Arbeitseinsatz, sondern auch bei in Transportstellung ausgehobener Maschine, auch auf Dammkronen aufweisenden Wegen sich der Fahrwegskontur anpassen, so dass es zu keiner Kippunsicherheit kommt. Das Druckbegrenzungsventil stellt sicher, dass auch bei auf Anschlag gefahrenen Hydraulikzylindern, d.h. wenn die Hydraulikzylinder ganz ausgefahren sind und die Maschine ganz ausgehoben ist, die mittleren Reifensätze beim Fahren auf Dammkronen oder anderen Erhebungen nach oben ausweichen können, so dass die Seitenreifen mit der gleichen Kraft gegen den Boden wie die mittleren Reifensätze gedrückt werden. Über das Druckbegrenzungsventil wird Öl aus den den mittleren Reifensätzen zugeordneten Hydraulikzylindern gedrückt. Somit wird ein Umkippen der Maschine auch auf in der Mitte stark erhöhten bzw. überhöhten Straßen sichergestellt, da Öl über das Druckbegrenzungsventil durch den freien Rücklauf in das Hydrauliksystem entweichen kann.

Um das Ausgleichssystem an die Masse der Maschine anpassen zu können, ist vorgesehen, dass das Druckbegrenzungsventil einstellbar ist.

Ein einfaches Zurückleiten des über das Druckbegrenzungsventil aus dem Überdruckanschluss herausströmenden Öls wird dadurch erreicht, dass der Überdruckanschluss des Druckbegrenzungsventils an der freien Rücklaufleitung einer Hydraulikanlage angeschlossen ist.

Eine einfache Ausgestaltung des Ausgleichssystems für das Fahrwerk wird dadurch erreicht, dass die Hydraulikleitungen der parallel geschalteten Hydraulikzylinder an ein Steuergerät einer Hydraulikanlage angeschlossen sind.

Weitere Einzelheiten der Erfindung sind den übrigen Unteransprüchen und der Beispielsbeschreibung zu entnehmen. Hierbei zeigen
- Fig. 1: das Fahrwerk der landwirtschaftlichen Bodenbearbeitungsmaschine in Arbeitsstellung in Seitenansicht und in schematischer Darstellung,
- Fig. 2: das Fahrwerk der landwirtschaftlichen Bodenbearbeitungsmaschine in Arbeitsstellung nach Fig. 1 in perspektivischer und in schematischer Darstellung und in einem größeren Maßstab,
- Fig. 3: das Fahrwerk der landwirtschaftlichen Bodenbearbeitungsmaschine in Zwischenstellung bzw. erste Transportposition in Seitenansicht und in schematischer Darstellung,
- Fig. 4: das Fahrwerk der landwirtschaftlichen Bodenbearbeitungsmaschine in Zwischenstellung bzw. erste Transportposition in perspektivischer und in schematischer Darstellung,
- Fig. 5: das Fahrwerk der landwirtschaftlichen Bodenbearbeitungsmaschine ist ganz ausgefahren in Seitenansicht und in schematischer Darstellung,
- Fig. 6: das Fahrwerk der landwirtschaftlichen Bodenbearbeitungsmaschine in ganz ausgefahren für eine maximale Bodenfreiheit in Transportstellung nach Fig. 5 in perspektivischer und in schematischer Darstellung und in vergrößertem Maßstab,
- Fig. 7: das Fahrwerk der landwirtschaftlichen Maschine gemäß Fig. 5, jedoch beim Befahren eines Fahrwerks mit Dammkrone,
- Fig. 8: das Fahrwerk der landwirtschaftlichen Bodenbearbeitungsmaschine gemäß Fig. 7 in perspektivischer und in schematischer Darstellung und in einem größeren Maßstab,
- Fig. 9: das Fahrwerk der landwirtschaftlichen Maschine gemäß Fig. 7 und Fig. 8 in der Ansicht von hinten und
- Fig. 10: den Hydraulikschaltplan in Prinzipdarstellung.

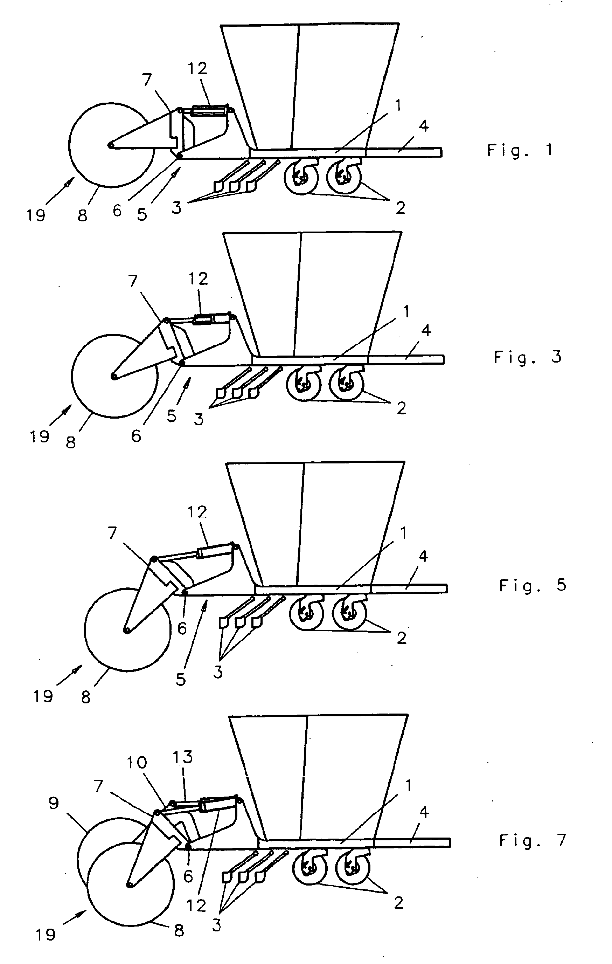

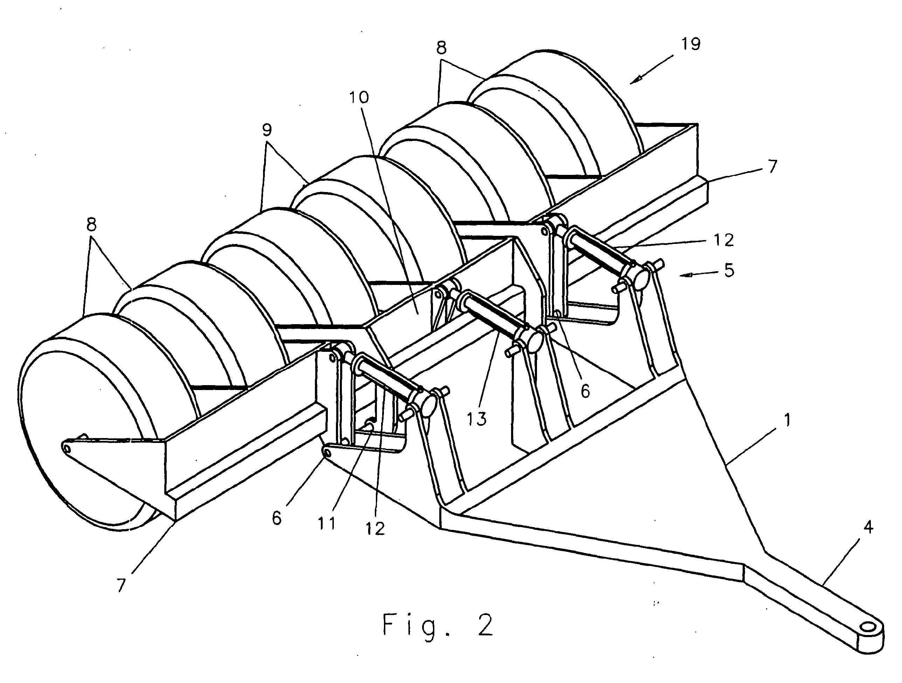

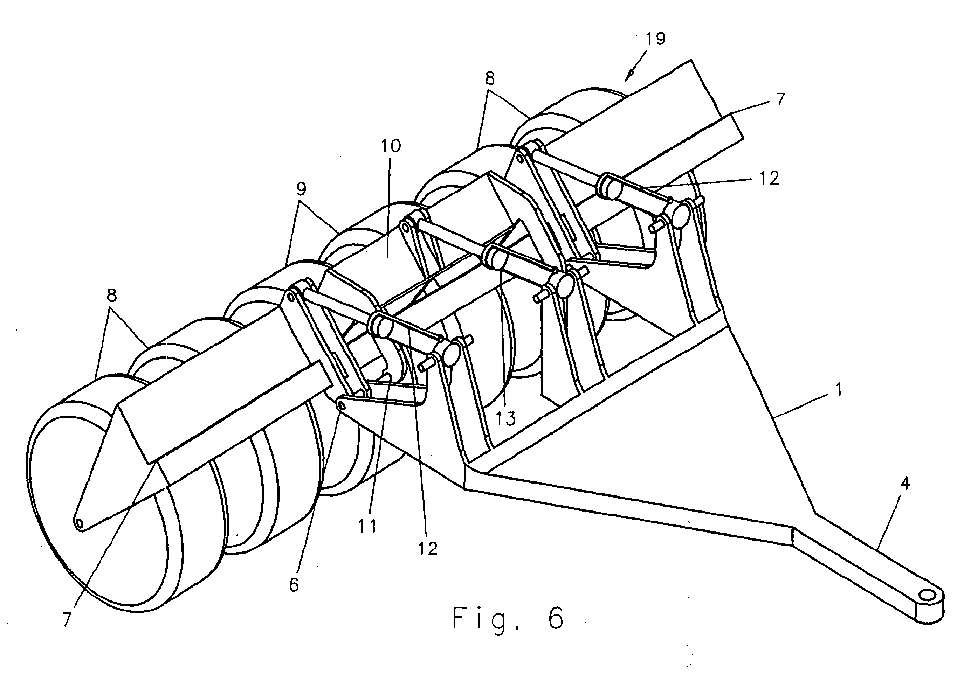

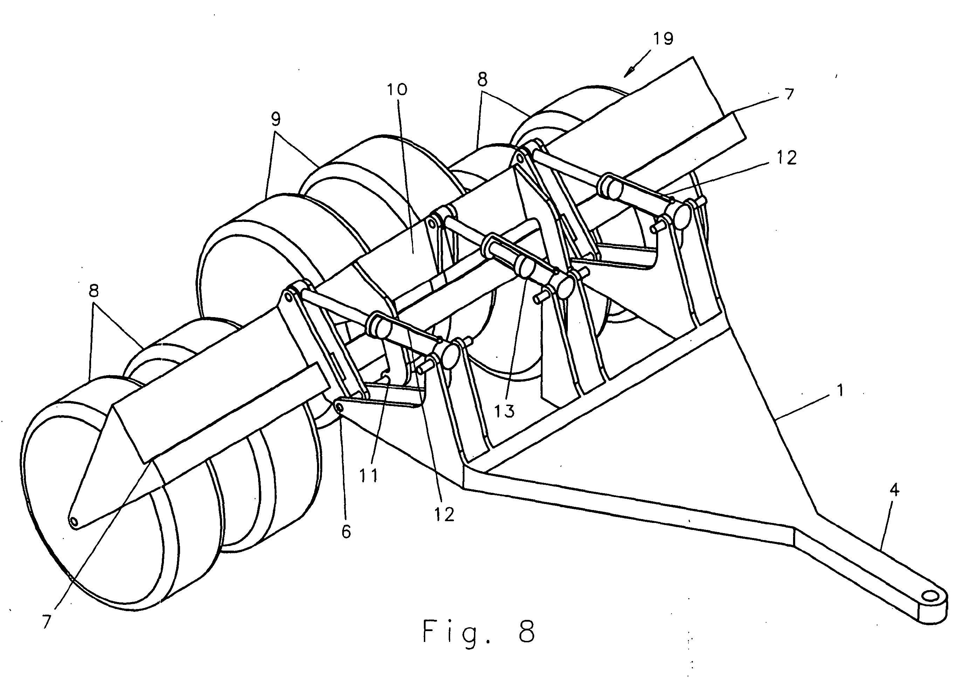

Die Bodenbearbeitungsmaschine weist einen Rahmen 1 auf. Der Übersichtlichkeit halber ist ein vereinfachter Rahmen 1 in schematischer Weise dargestellt. Verwendung können übliche Rahmen üblicher Bodenbearbeitungsmaschinen finden, an denen in bekannter Weise verschiedenartige Bodenbearbeitungswerkzeuge 2 in mehreren Querreihen hintereinander an Tragbalken angeordnet sein können. Es können den Tragbalken der Bodenbearbeitungsmaschine neben den Bodenbearbeitungswerkzeugen 2 jeglicher Art auch Säschare 3 etc. einer Sämaschine zugeordnet sein. Dieses ist in den Fig. 1, 3, 5 und 7 in schematischer Weise in vereinfachter Darstellungsweise dargestellt jedoch in den Fig. 2, 4, 6, 8 und aufgrund der besseren Übersichtlichkeit bezüglich der Funktionsweise des Fahrwerks nicht dargestellt werden.

Der Tragrahmen 1 weist auf seiner Vorderseite eine Zugdeichsel 4 zur Ankupplung an die Zugvorrichtung eines Ackerschleppers auf.

An der Rückseite 5 des Tragrahmens 1 ist mittels der Gelenke 6 der Fahrwerksrahmen 7 angeordnet. An diesem Fahrwerksrahmen 7 sind zwei Seitenreifensätze 8, die zusammen mit dem mittleren Seitenreifensatz 9 einen Reifenpacker nach Art einer unterteilten Walze bilden, angeordnet. Zwischen den beiden Seitenreifensätzen 8 ist der mittlere Reifensatz 9 zwischen den Seitenreifensätzen 8 angeordnet. Dieser mittlere Reifensatz 9 ist in einem Mitteltragrahmen 10 an dem Fahrwerkstragrahmen 7 mittels der Gelenke 11 angeordnet. Die Gelenkachsen der Gelenke 6 und 10 fluchten miteinander. Der mittlere Reifensatz 9 ist zwischen den Seitenreifensätzen 8 zu den Seitenreifensätzen 8 relativ und somit höhenbeweglich gelagert.

Zwischen den Fahrwerksrahmen 7 der Seitenreifensätze 8 und dem Mitteltragrahmen 10 des mittleren Reifensatzes 9 und dem Tragrahmen 1 sind jeweils als einfach wirkende Hydraulikzylinder 12 und 13 ausgebildete Hydraulikzylinder angeordnet.

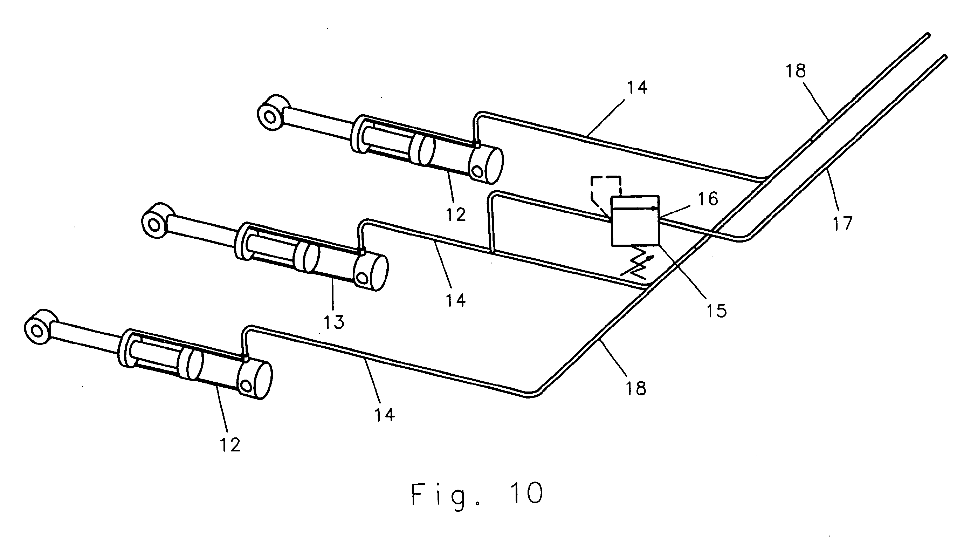

Die Hydraulikzylinder 12 der Seitenreifensätze 8 und der Hydraulikzylinder 13 des mittleren Reifensatzes 9 sind, wie Fig. 10 zeigt, mittels der Hydraulikleitungen 14 zu einem Ausgleichssystem in Art einer Parallelschaltung miteinander verbunden. In der zu der dem mittleren Reifensatz 9 zugeordneten Hydraulikzylinder 13 führenden Hydraulikleitung 14 bzw. dem Hydraulikzylinder 13 selbst ist ein vorzugsweise einstellbares Druckbegrenzungsventil 15 angeordnet. Der Überdruckanschluss 16 des Druckbegrenzungsventils 15 ist an die freie Rücklaufleitung 17 einer nicht dargestellten Hydraulikanlage angeschlossen, so dass das Öl von dem Überdruckanschluss 16 über die freie Rücklaufleitung 17 ohne Gegendruck frei in die Hydraulikanlage zurückfließen kann.

Die Hydraulikleitungen 14 sind über eine Sammelleitung 18 an ein nicht dargestelltes Steuergerät der Hydraulikanlage, beispielsweise der Hydraulikanlage eines Schleppers angeschlossen. Über dieses Steuergerät und die Sammelleitung 18 können die in einem Ausgleichssystem zusammengeschlossenen Hydraulikzylinder 12 und 13 mit Öl beaufschlagt werden. Es kann jedoch auch Öl bei entsprechender Stellung des Hydraulikgerätes aus den Hydraulikzylindern herausgedrückt und in die Hydraulikanlage zurückfließen, so dass je nach Stellung des Steuergerätes die Hydraulikzylinder ausgefahren oder eingefahren somit die Reifensätze 8 und 9 gegenüber dem Tragrahmen 1 abgesenkt oder angehoben werden können.

Die Funktionsweise der im Halbschnitt dargestellten Hydraulikzylinder 8 und 9 und des Ausgleichssystems bzw. des Druckbegrenzungsventils 15 des Fahrwerkes für eine landwirtschaftliche Bodenbearbeitungsmaschine ist folgende:

Durch Drucklosschalten des Steuergerätes kann das Öl aus den Hydraulikzylindern 12 und 13 und über die Leitung 18 in die Hydraulikanlage zurückströmen, so dass das Fahrwerk durch Eigengewicht der Maschine gegenüber dem Tragrahmen 1 in die in Fig. 1 und 2 dargestellte Stellung gebracht werden kann. In dieser Position wird der Tragrahmen 1 mit den daran angeordneten Werkzeugen 2 und 3 in die Arbeitsposition abgesenkt. Das von den Reifensätzen 8 und 9 gebildet Fahrwerk 19 ist somit eingefahren. Die Bodenbearbeitungsmaschine befindet sich in Arbeitsstellung und die Hydraulikzylinder 12 und 13 sind eingefahren und es ist keine Relativbewegung zwischen den Fahrwerksrahmen 7 und dem Mittelfahrwerksrahmen 10 möglich.

Sollte eine Relativbewegung zwischen den einzelnen Reifen der Reifensätze 8, 9 in der Arbeitsposition gewünscht sein, so müssen die einzelnen Reifen der Reifensätze 8 und 9 an den Fahrwerksrahmen 7 und Mittelfahrwerksrahmen 10 gelenkig aufgehängt werden und mit einem weiteren Ausgleichssystem bekannter Art ausgestattet werden. Aufgrund dieses weiteren Ausgleichssystem können die einzelnen Reifen oder Reifensätze sich gegeneinander beweglichen und den Boden auch auf welligen Bodenoberflächen gleichmäßig andrücken und verdichten.

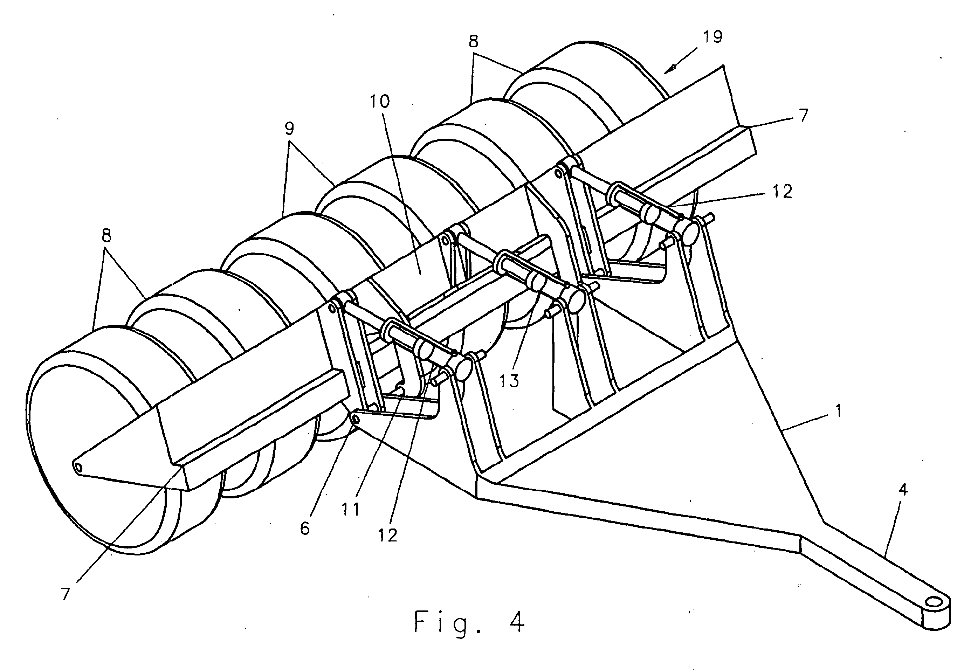

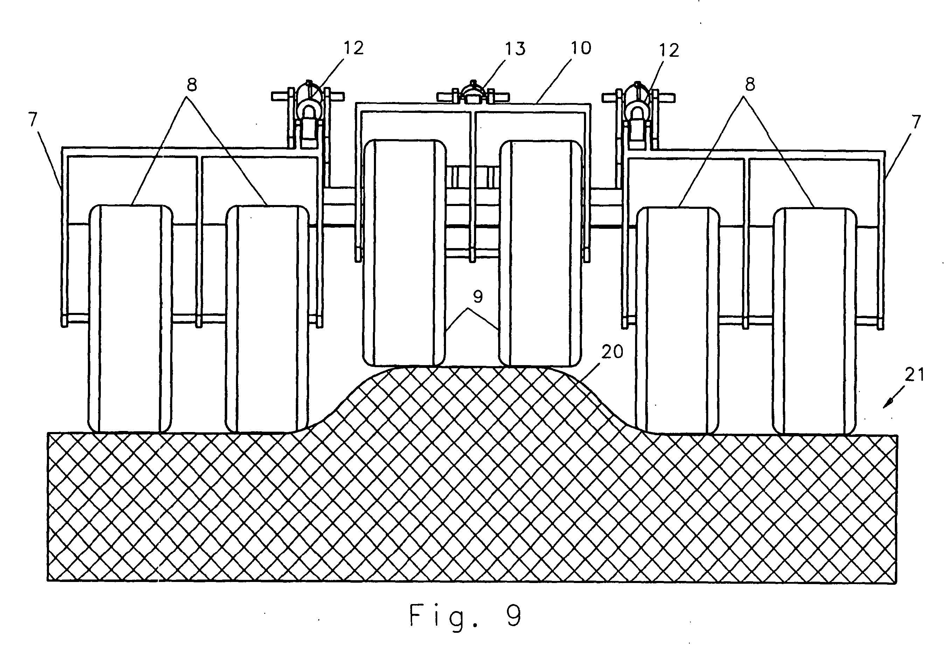

Durch Beaufschlagung der Hydraulikzylinder 8 und 9 über die Leitung 18 durch die Hydraulikanlage mit Öl, in dem das Steuergerät in die entsprechende Stellung gebracht wird, lässt sich das Fahrwerk 19 in eine Zwischenstellung gemäß Fig. 3 und 4 bringen. In dieser Zwischenstellung, die auch Transportposition sein kann, kann sich der Mittelfahrwerksrahmen 10 relativ zu dem Fahrwerksrahmen 7 und umgedreht bewegen. Hydrauliköl kann dann zwischen den beiden äußeren Hydraulikzylindern 8 und dem mittleren Hydraulikzylinder 9 über die Leitungen 14 entsprechend des Ausgleichssystems verschoben werden. So kann beispielsweise beim Fahren der Maschine auf der Dammkrone 20 eines Fahrwegs 21 der mittlere Reifensatz 9 nach oben gedrückt werden, so dass das Fahrwerk sich der Fahrwerkskontur anpassen kann, wie Fig. 9 dies deutlich macht.

Um eine maximale Bodenfreiheit der Werkzeuge 2 und 3 an dem Tragrahmen 1 zu erreichen, kann durch eine entsprechende Druckbeaufschlagung der Hydraulikzylinder 8 und 9 über die Leitungen 14 und 18, in dem das Steuergerät in die entsprechende Stellung gebracht wird, in die in Fig. 7 bis 9 dargestellte Position ganz ausgehoben werden. In dieser Endstellung der Hydraulikzylinder 8 und 9 kann sich zunächst der Fahrwerksrahmen 7 zu dem Mittelfahrwerksrahmen 10 nicht bewegen. Wenn jedoch mit dem Fahrwerk 19 die Bodenbearbeitungsmaschine auf eine eine Dammkrone 20 aufweisende Fahrweg 21 fährt, wird aus dem Hydraulikzylinder 9 über das Druckbegrenzungsventil 15 Hydrauliköl über den Überdruckanschluss 16 und die freie Rücklaufleitung 17 in die Hydraulikanlage zurückgedrückt, so dass sich aufgrund des Druckbegrenzungsventils 16 sich das Fahrwerk 19 der Kontur des Fahrweges 21 anpassen kann wie Fig. 9 zeigt. Sämtliche Reifensätze 8 und 9 werden auch in diesem Falle mit dem gleichen Druck belastet.

## Patentansprüche

1. Fahrwerk, für eine landwirtschaftliche Bodenbearbeitungsmaschine, mit mehreren nebeneinander in Reihe an einem Tragrahmen (1) mittels Gelenke höhenbeweglich angeordneten Reifensätzen, die einen Reifenpacker nach Art einer unterteilten Walze bilden, wobei ein mittlerer, zwischen zwei Seitenreifensätzen (8) angeordneter Reifensatz (9) relativ zu den Seitenreifensätzen (8) höhenbeweglich gelagert ist, wobei zwischen den Seitenreifensätzen (8) und dem Tragrahmen (1) Hydraulikzylinder angeordnet sind, **dadurch gekennzeichnet, dass** zwischen dem mittleren Reifensatz (9) und dem Tragrahmen (1)ebenfalls zumindest ein Hydraulikzylinder (13) angeordnet ist, dass die Hydraulikzylinder (12) der Seitenreifensätze (8) und des mittleren Reifensatzes (9) mittels Hydraulikleitungen (14,18) zu einem Ausgleichssystem über eine Parallelschaltung miteinander verbunden sind, und das dem (den) Hydraulikzylinder(n) (13) des mittleren Reifensatzes (9) zumindest ein Druckbegrenzungsventil (15) zugeordnet ist.

2. Fahrwerk nach Anspruch 1, **dadurch gekennzeichnet, dass** das Druckbegrenzungsventil (15) einstellbar ist.

3. Fahrwerk nach Anspruch 1, **dadurch gekennzeichnet, dass** der Überdruckanschluss (16) des Druckbegrenzungsventils (15) an der freien Rücklaufleitung (17) einer Hydraulikanlage angeschlossen ist.

4. Fahrwerk nach einem oder mehreren der vorstehenden Ansprüche, **dadurch gekennzeichnet, dass** die Hydraulikzylinder (12,13) als einfachwirkende Hydraulikzylinder ausgebildet sind.

5. Fahrwerk nach einem oder mehreren der vorstehenden Ansprüche, **dadurch gekennzeichnet, dass** die Hydraulikleitungen (14,18) der parallel geschalteten Hydraulikzylinder (12,13) an ein Steuergerät einer Hydraulikanlage angeschlossen sind.

## Claims

1. Undercarriage for an agricultural soil cultivation machine, having a plurality of tyre sets which are arranged alongside one another in a row on a support frame (1) and in a height-adjustable manner by means of joints and form a tyre packer in the manner of a divided roller, wherein a central tyre set (9) arranged between two lateral tyre sets (8) is mounted in a height-adjustable manner in relation to the lateral tyre sets (8), wherein hydraulic cylinders are arranged between the lateral tyre sets (8) and the support frame (1), **characterized in that** at least one hydraulic cylinder (13) is likewise arranged between the central tyre set (9) and the support frame (1), **in that** the hydraulic cylinders (12) of the lateral tyre sets (8) and of the central tyre set (9) are connected together by means of hydraulic lines (14, 18) to form a compensating system via a parallel connection, and **in that** at least one pressure-limiting valve (15) is assigned to the hydraulic cylinder(s) (13) of the central tyre set (9).

2. Undercarriage according to Claim 1, **characterized in that** the pressure-limiting valve (15) is adjustable.

3. Undercarriage according to Claim 1, **characterized in that** the positive pressure port (16) of the pressure-limiting valve (15) is connected to the free return line (17) of a hydraulic system.

4. Undercarriage according to one or more of the preceding claims, **characterized in that** the hydraulic cylinders (12, 13) are formed as single-acting hydraulic cylinders.

5. Undercarriage according to one or more of the preceding claims, **characterized in that** the hydraulic lines (14, 18) of the hydraulic cylinders (12, 13) connected in parallel are connected to a control unit of a hydraulic system.

## Revendications

1. Châssis de machine agricole pour le travail du sol comportant plusieurs jeux de pneumatiques installés de manière réglable en hauteur par des articulations sur un cadre de support (1) constituant un compacteur à pneumatiques à rouleau subdivisé,
- un jeu médian de pneumatiques (9) installé entre deux jeux de pneumatiques latéraux (8) étant monté mobile en hauteur par rapport aux jeux de pneumatiques latéraux (8),
- des vérins hydrauliques étant installés entre les jeux de pneumatiques latéraux (8) et le cadre (1),
châssis **caractérisé en ce qu'**
- au moins un vérin hydraulique (13) est installé entre le jeu médian de pneumatiques (9) et le cadre (1),
- les vérins hydrauliques (12) des jeux de pneumatiques latéraux (8) et du jeu médian de pneumatiques (9) étant reliés par des conduites hydrauliques (14, 18) à un système d'équilibrage par un circuit en parallèle, et
- au moins une soupape de limitation de pression (15) est associée au(x) vérin(s) hydraulique(s) (13) du jeu médian de pneumatiques (9).

2. Châssis, selon la revendication 1,
**caractérisé en ce que**
la soupape de limitation de pression (15) est réglable.

3. Châssis selon la revendication 1,
**caractérisé en ce que**
le branchement de surpression (16) de la soupape de limitation de pression (15) est relié à la conduite de retour libre (17) d'une installation hydraulique.

4. Châssis, selon l'une ou plusieurs des revendications précédentes,
**caractérisé en ce que**
les vérins hydrauliques (12, 13) sont des vérins hydrauliques simple effet.

5. Châssis, selon l'une ou plusieurs des revendications précédentes,
**caractérisé en ce que**
les conduites hydrauliques (14, 18) des vérins hydrauliques (12, 13) branchés en parallèle sont raccordées à un appareil de commande d'une installation hydraulique.
